(19) **Europäisches Patentamt / European Patent Office / Office européen des brevets**

(11) **EP 4 407 157 A1**

(12) **EUROPEAN PATENT APPLICATION**
published in accordance with Art. 153(4) EPC

(43) Date of publication:
**31.07.2024 Bulletin 2024/31**

(21) Application number: **22871583.5**

(22) Date of filing: **22.07.2022**

(51) International Patent Classification (IPC):
*F02B 77/08* $^{(2006.01)}$   *G06F 30/20* $^{(2020.01)}$
*G01M 15/00* $^{(2006.01)}$   *G01L 3/00* $^{(2006.01)}$

(86) International application number:
**PCT/CN2022/107321**

(87) International publication number:
**WO 2023/045524 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.09.2021  CN 202111118355**

(71) Applicants:
• **Ningbo Geely Royal Engine Components Co.,
  Ltd.**
  **Ningbo, Zhejiang 315000 (CN)**
• **Aurobay Technology Co., Ltd.**
  **Ningbo, Zhejiang 315899 (CN)**
• **Zhejiang Geely Holding Group Co., Ltd.**
  **Hangzhou, Zhejiang 310000 (CN)**

(72) Inventors:
• **LEI, Xiaoliang**
  **Hangzhou Bay New District Ningbo, Zhejiang
  315000 (CN)**
• **QIAN, Pengfei**
  **Hangzhou Bay New District Ningbo, Zhejiang
  315000 (CN)**

• **SHI, Gang**
  **Hangzhou Bay New District Ningbo, Zhejiang
  315000 (CN)**
• **LIU, Yiqiang**
  **Hangzhou Bay New District Ningbo, Zhejiang
  315000 (CN)**
• **QIAO, Zhiwei**
  **Hangzhou Bay New District Ningbo, Zhejiang
  315000 (CN)**
• **ZHONG, Jun**
  **Hangzhou Bay New District Ningbo, Zhejiang
  315000 (CN)**
• **WANG, Ruiping**
  **Hangzhou Bay New District Ningbo, Zhejiang
  315000 (CN)**
• **SCHOLTEN, Ingo**
  **Hangzhou Bay New District Ningbo, Zhejiang
  315000 (CN)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(54) **METHOD AND APPARATUS FOR PREDICTING TORQUE OF ENGINE, AND COMPUTER
STORAGE MEDIUM**

(57)    Disclosed are a prediction method for engine torque, a device and a computer storage medium. The method includes: collecting tooth times corresponding to a plurality of teeth of an engine crankshaft based on a crankshaft position sensor (S10); obtaining an engine speed value corresponding to each tooth time (S20); performing amplitude-frequency analysis processing on a plurality of the engine speed values by adopting discrete Fourier transform to obtain a modulus value and a phase angle of a complex number after the discrete Fourier transform (S30); and obtaining a predicted torque of the engine according to the modulus value and the phase angle (S40).

**(Cont. next page)**

EP 4 407 157 A1

continuously collecting the engine crankshaft position sensor tooth time of a single cylinder — S1

↓ TT[0-39]

calculating the engine speed according to the tooth time — S2

↓ n_EngInsTT [0-39]

performing amplitude-frequency analysis on the engine speed signal — S3

↓ DFTCosRe / DFTSinIm

signal filtering — S4

↓ Z_DFTReRev / Z_DFTImRev

calculating the energy, the phase, and the average rotation speed — S5

↓ Z_DFTAbs / an_DFT / n_Eng2RevAvg

calculating the engine torque — S6

FIG. 4

**Description**

**CROSS-REFERENCE TO RELATED APPLICATIONS**

This application claims priority to Chinese Patent Application No. 202111118355.7, filed on September 23, 2021, the entire contents of which are incorporated herein by reference.

**TECHNICAL FIELD**

The present application relates to the technical field of engine torque, and in particular to a prediction method for engine torque, a device, and a computer storage medium.

**BACKGROUND**

Functional safety is like the human body's immune system and has become the protector of autonomous driving systems. When an abnormality occurs in the system, functional safety needs to play a role in guiding the results to the safe side. Functional safety plays a role in guiding, regulating, and controlling the entire life cycle of autonomous driving systems. For example, the engine's air intake is controlled by an electronic throttle. If a signal error, software error, or hardware error occurs, the electronic throttle may be out of control, causing the car to accelerate rapidly and causing danger. Therefore, a safety monitoring function must be introduced.

The engine control system is a safety-related system and requires the system to be able to self-check safety-related faults. In order to make the engine control system a safe and reliable system, it is common practice to design another layer of algorithms to monitor the torque of the conventional engine control system.

The actual torque output by the engine is usually calculated through the intake air volume, fuel injection volume, rotation speed, ignition angle efficiency, multiple injection efficiency, and cylinder deactivation efficiency. The sensor actuators involved include intake manifold pressure, water temperature, crankshaft position, fuel injectors, rail pressure sensors, ignition coils and spark plugs, etc. Since there are many sensors and actuators involved, the risk of unreliable torque caused by the failure of one or several sensors will increase, and the vehicle safety is reduced.

The above content is only used to assist in understanding the technical solutions of the present application, and does not represent an admission that the above content is prior art.

**SUMMARY**

The main purpose of the present application is to provide a prediction method for engine torque, a device, and a computer storage medium, aiming to avoid using data from multiple sensors simultaneously to predict torque and improve the credibility of the predicted torque.

In order to achieve the above purpose, the present application provides a prediction method for engine torque, and the method includes the following steps: collecting tooth times corresponding to a plurality of teeth of an engine crankshaft based on a crankshaft position sensor; obtaining an engine speed value corresponding to each tooth time; performing amplitude-frequency analysis processing on a plurality of the engine speed values by adopting discrete Fourier transform to obtain a modulus value and a phase angle of a complex number after the discrete Fourier transform; and obtaining a predicted torque of an engine according to the modulus value and the phase angle.

In an embodiment, the obtaining the predicted torque of the engine according to the modulus value and the phase angle includes: obtaining an average engine speed value corresponding to a current combustion cycle of the engine crankshaft; obtaining an engine combustion torque according to the average engine speed value and the modulus value; obtaining an engine combustion efficiency according to the average engine speed value and the phase angle; and configuring a product of the engine combustion torque and the engine combustion efficiency as the predicted torque.

In an embodiment, the performing the amplitude-frequency analysis processing on the plurality of engine speed values by adopting the discrete Fourier transform to obtain the modulus value and the phase angle of the complex number after the discrete Fourier transform includes: performing the amplitude-frequency analysis processing on the plurality of engine speed values by adopting the discrete Fourier transform to obtain a sine component amplitude and a cosine component amplitude corresponding to the complex number after the discrete Fourier transform; and obtaining the modulus value and the phase angle of the complex number after the discrete Fourier transform according to the sine component amplitude and the cosine component amplitude.

In an embodiment, the obtaining the modulus value and the phase angle of the complex number after the discrete Fourier transform according to the sine component amplitude and the cosine component amplitude includes: performing signal filtering processing on the sine component amplitude and the cosine component amplitude to obtain the sine component amplitude and the cosine component amplitude after the signal filtering processing; and obtaining the modulus value and the phase angle of the complex number after the discrete Fourier transform according to the sine component amplitude and the cosine component amplitude after the signal filtering processing.

In an embodiment, the performing the signal filtering processing on the sine component amplitude and the cosine component amplitude to obtain the sine component amplitude and the cosine component amplitude after the signal filtering processing includes: obtaining a total sine component amplitude corresponding to the current combustion cycle of the engine crankshaft according to the sine component amplitude, and obtaining a total cosine component amplitude corresponding to the current combustion cycle of the engine crankshaft according to the cosine component amplitude; obtaining the sine component amplitude after the signal filtering processing according to the total sine component amplitude corresponding to the current combustion cycle and a total sine component amplitude corresponding to a previous combustion cycle; and obtaining the cosine component amplitude after the signal filtering processing according to the total cosine component amplitude corresponding to the current combustion cycle and a total cosine component amplitude corresponding to a previous combustion cycle.

In an embodiment, the obtaining the sine component amplitude after the signal filtering processing according to the total sine component amplitude corresponding to the current combustion cycle and the total sine component amplitude corresponding to a previous combustion cycle includes: performing weighted average processing on the total sine component amplitude corresponding to the current combustion cycle and the total sine component amplitude corresponding to the previous combustion cycle to obtain the sine component amplitude after the signal filtering processing; the obtaining the cosine component amplitude after the signal filtering processing according to the total cosine component amplitude corresponding to the current combustion cycle and the total cosine component amplitude corresponding to a previous combustion cycle includes: performing weighted average processing on the total cosine component amplitude corresponding to the current combustion cycle and the total cosine component amplitude corresponding to the previous combustion cycle to obtain the cosine component amplitude after the signal filtering processing.

In an embodiment, the modulus value of the complex number after the discrete Fourier transform is calculated by the following formula:

$$Z\_DFTAbs^2 = Z\_DFTReRev^2 + Z\_DFTImRev^2$$

the phase angle of the complex number after the discrete Fourier transform is calculated by the following formula:

$$an\_DFT = acrtan(-Z\_DFTReRev / Z\_DFTImRev)$$

Z_DFTAbs is the modulus value of the complex number after the discrete Fourier transform, and an_DFT is the phase angle of the complex number after the discrete Fourier transform; in response to that Z_DFTReRev is the cosine component amplitude, Z_DFTImRev is the sine component amplitude, or in response to that Z_DFTReRev is the cosine component amplitude after the signal filtering processing, Z_DFTImRev is the sine component amplitude after the signal filtering processing.

In an embodiment, the collecting tooth times corresponding to the plurality of teeth of the engine crankshaft based on the crankshaft position sensor includes: collecting the tooth time of a tooth corresponding to at least one engine cylinder based on the crankshaft position sensor among the plurality of teeth of the engine crankshaft; the performing the amplitude-frequency analysis processing on the plurality of engine speed values by adopting the discrete Fourier transform includes: performing the amplitude-frequency analysis processing on a plurality of engine speed values corresponding to at least one engine cylinder by adopting the discrete Fourier transform.

In addition, in order to achieve the above purpose, the present application further provides a prediction device for engine torque, including: a memory, a processor, and a prediction program for engine torque stored in the memory and operable on the processor. When the prediction program for engine torque is executed by the processor, the steps of the prediction method for engine torque described above are implemented.

In addition, in order to achieve the above purpose, the present application further provides a computer-readable storage medium; a prediction program for engine torque is stored on the computer-readable storage medium, and when the prediction program for engine torque is executed by a processor, the steps of the prediction method for engine torque mentioned above are implemented.

The prediction method for engine torque, device and computer storage medium provided according to the embodiments of the present application, collect tooth times corresponding to a plurality of teeth of an engine crankshaft based on a crankshaft position sensor; obtain an engine speed value corresponding to each tooth time; perform amplitude-frequency analysis processing on a plurality of the engine speed values by adopting discrete Fourier transform to obtain a modulus value and a phase angle of a complex number after the discrete Fourier transform; and obtain a predicted torque of the engine according to the modulus value and the phase angle. The present application only collects the tooth time of the engine crankshaft through the crankshaft position sensor and converts it into an engine speed value. Discrete Fourier transform is adopted to perform amplitude-frequency analysis processing on plurality of discrete speed values to obtain a modulus value representing the rotational speed energy of the engine and a phase angle representing an effectiveness of piston torque, which can predict the engine torque more accurately, avoiding the simultaneous use of multiple sensors, and improving the credibility of the predicted torque and vehicle safety.

## BRIEF DESCRIPTION OF THE DRAWINGS

FIG. 1 is a schematic structural diagram of a terminal in a hardware operating environment involved in the solution of the embodiment of the present application.
FIG. 2 is a schematic flowchart of a prediction method for engine torque according to an embodiment of the present application.
FIG. 3 is a schematic flowchart of the prediction method for engine torque according to another embodiment of the present application.
FIG. 4 is a schematic flowchart of the prediction method for engine torque according to an exemplary illustration of the present application.
FIG. 5 is a schematic diagram of a variation curve of engine speed according to the present application.
FIG. 6 is a schematic diagram of a corresponding position between teeth of an engine crankshaft and an engine cylinder according to the present application.

The realization, functional features and advantages of the present application will be further described in conjunction with the embodiments and with reference to the accompanying drawings.

## DETAILED DESCRIPTION OF THE EMBODIMENTS

It should be understood that the specific embodiments described herein are only used to explain the present application, and are not intended to limit the present application.

Embodiments of the present application provides a solution, which only collects the tooth time of the engine crankshaft through the crankshaft position sensor and converts it into an engine speed value. The discrete Fourier transform is adopted to perform amplitude-frequency analysis processing on a plurality of discrete speed values to obtain a modulus value representing the rotational speed energy of the engine and the phase angle representing an effectiveness of piston torque, so that the engine torque can be predicted more accurately, avoiding the simultaneous use of multiple sensors, and improving the credibility of the predicted torque and vehicle safety.

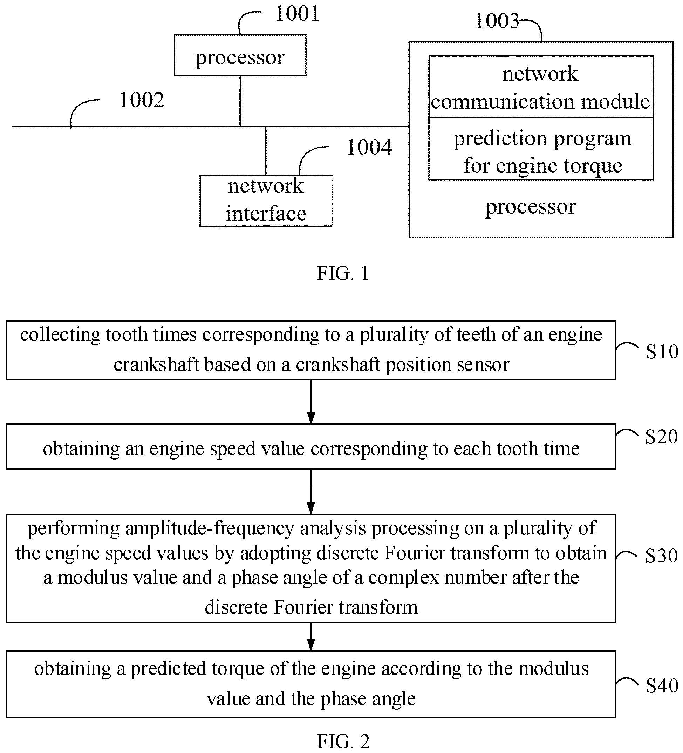

As shown in FIG. 1, which is a schematic structural diagram of a terminal in a hardware operating environment involved in the solution of the embodiment of the present application.

According to an embodiment of the present application, the terminal is a prediction device for engine torque.

As shown in FIG. 1, the terminal may include: a processor 1001, such as a central processing unit (CPU), digital signal processor (DSP), micro controller unit (MCU), a network interface 1004, a memory 1003, and a communication bus 1002. The communication bus 1002 is configured to realize connection and communication between these components. In an embodiment, the network interface 1004 may include a standard wired interface or a wireless interface (such as a wireless fidelity (Wi-Fi) interface). The memory 1003 may be a high-speed random access memory (RAM) or a stable non-volatile memory (NVM), such as a disk memory. The memory 1003 may further be a storage device independent of the aforementioned processor 1001.

Those skilled in the art can understand that the terminal structure shown in FIG. 1 does not constitute a limitation on the terminal, and may include more or less components than shown in the figure, or combine some components, or arrange different components.

As shown in FIG. 1, the memory 1003 as a computer storage medium may include a network communication module and a prediction program for engine torque.

In the terminal shown in FIG. 1, the network interface 1004 is mainly configured to connect to the vehicle's controller area network (CAN) and perform data communication with the CAN; and the processor 1001 can be configured to call the prediction program for engine torque stored in the memory 1003, and performs the following operations: collecting tooth times corresponding to a plurality of teeth of an engine crankshaft based on a crankshaft position sensor; obtaining an engine speed value corresponding to each tooth time; performing amplitude-frequency analysis processing on a plurality of the engine speed values by adopting discrete Fourier transform to obtain a modulus value and a phase angle of a complex number after the discrete Fourier transform; and obtaining a predicted torque of the engine according to the modulus value and the phase angle.

**EP 4 407 157 A1**

In an embodiment, the processor 1001 may call the prediction program for engine torque stored in the memory 1003 and further perform the following operations: obtaining an average engine speed value corresponding to a current combustion cycle of the engine crankshaft; obtaining an engine combustion torque according to the average engine speed value and the modulus value; obtaining an engine combustion efficiency according to the average engine speed value and the phase angle; and configuring a product of the engine combustion torque and the engine combustion efficiency as the predicted torque.

In an embodiment, the processor 1001 may call the prediction program for engine torque stored in the memory 1003 and also perform the following operations: performing amplitude-frequency analysis processing on the plurality of engine speed values by adopting the discrete Fourier transform to obtain a sine component amplitude and a cosine component amplitude corresponding to the complex numbers after the discrete Fourier transform; and obtaining the modulus value and the phase angle of the complex number after the discrete Fourier transform according to the sine component amplitude and a cosine component amplitude.

In an embodiment, the processor 1001 may call the prediction program for engine torque stored in the memory 1003 and also perform the following operations: performing signal filtering processing on the sine component amplitude and the cosine component amplitude to obtain the sine component amplitude and the cosine component amplitude after the signal filtering processing; and obtaining the modulus value and the phase angle of the complex number after the discrete Fourier transform according to the sine component amplitude and the cosine component amplitude after the signal filtering processing.

In an embodiment, the processor 1001 may call the prediction program for engine torque stored in the memory 1003 and also perform the following operations: obtaining a total sine component amplitude corresponding to the current combustion cycle of the engine crankshaft according to the sine component amplitude, and obtaining a total cosine component amplitude corresponding to the current combustion cycle of the engine crankshaft according to the cosine component amplitude; obtaining the sine component amplitude after the signal filtering processing according to the total sine component amplitude corresponding to the current combustion cycle and a total sine component amplitude corresponding to a previous combustion cycle; and obtaining the cosine component amplitude after the signal filtering processing according to the total cosine component amplitude corresponding to the current combustion cycle and a total cosine component amplitude corresponding to a previous combustion cycle.

In an embodiment, the processor 1001 may call the prediction program for engine torque stored in the memory 1003 and also perform the following operations: performing weighted average processing on the total sine component amplitude corresponding to the current combustion cycle and the total sine component amplitude corresponding to a previous combustion cycle to obtain the sine component amplitude after the signal filtering processing.

In an embodiment, the processor 1001 may call the prediction program for engine torque stored in the memory 1003 and also perform the following operations: performing weighted average processing on the total cosine component amplitude corresponding to the current combustion cycle and the total cosine component amplitude corresponding to a previous combustion cycle to obtain the cosine component amplitude after the signal filtering processing.

In an embodiment, the processor 1001 may call the prediction program for engine torque stored in the memory 1003 and also perform the following operations:

the modulus value of the complex number after the discrete Fourier transform is calculated by the following formula:

$$Z\_DFTAbs^2 = Z\_DFTReRev^2 + Z\_DFTImRev^2$$

the phase angle of the complex number after the discrete Fourier transform is calculated by the following formula:

$$an\_DFT = acrtan(-Z\_DFTReRev/Z\_DFTImRev)$$

Z_DFTAbs is the modulus value of the complex number after the discrete Fourier transform, an_DFT is the phase angle of the complex number after the discrete Fourier transform, in response to that Z_DFTReRev is the cosine component amplitude, Z_DFTImRev is the sine component amplitude, or in response to that Z_DFTReRev is the cosine component amplitude after the signal filtering processing, Z_DFTImRev is the sine component amplitude after the signal filtering processing.

In an embodiment, the processor 1001 may call the prediction program for engine torque stored in the memory 1003 and also perform the following operations: collecting the tooth time of a tooth corresponding to at least one engine cylinder based on the crankshaft position sensor among the plurality of teeth of the engine crankshaft;

In an embodiment, the processor 1001 may call the prediction program for engine torque stored in the memory 1003 and also perform the following operations: performing amplitude-frequency analysis processing on a plurality of engine speed values corresponding to at least one engine cylinder by adopting discrete Fourier transform.

As shown in FIG. 2, in an embodiment, the prediction method for engine torque includes the following steps: Step S 10, collecting tooth times corresponding to a plurality of teeth of an engine crankshaft based on a crankshaft position sensor.

In the embodiment, a crankshaft position sensor is provided near the crankshaft of the engine, and the crankshaft position sensor is configured to detect the tooth time when each tooth on the crankshaft passes near the crankshaft position sensor. Tooth time is the time it takes for the engine crankshaft to rotate the distance of one tooth. When the engine is running, the engine crankshaft rotates. The tooth time corresponding to each tooth on the engine crankshaft are generally different, and each tooth corresponds to one tooth time.

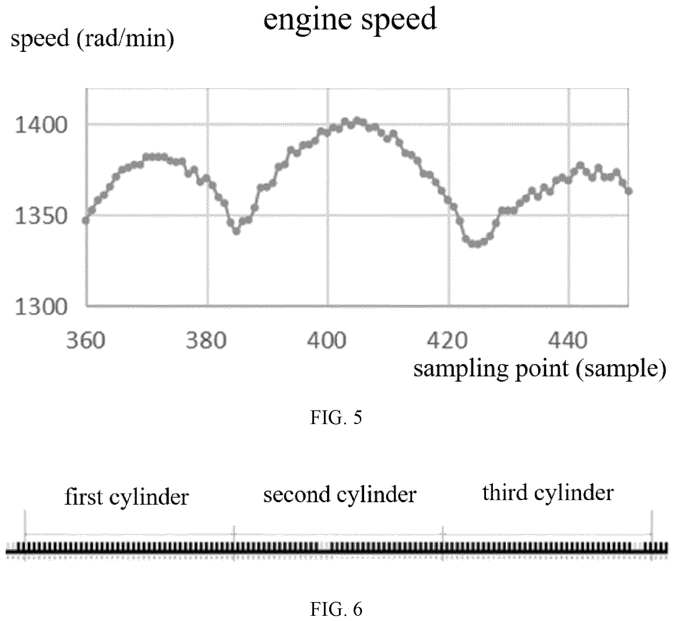

In an embodiment, among the plurality of teeth of the engine crankshaft, the tooth time of the teeth corresponding to at least one engine cylinder is collected based on the crankshaft position sensor. For example, as shown in FIG. 6, the crankshaft of a three-cylinder engine has 60 teeth, including two missing teeth. To complete the operation of the three cylinders of the engine, the crankshaft needs to rotate twice, and two rotations of the crankshaft constitute a combustion cycle. The crankshaft needs to rotate 120 teeth in one combustion cycle, so the teeth corresponding to one cylinder are 40 teeth. Therefore, starting from the second falling edge after the missing tooth of the first cylinder, the crankshaft position sensor can be used to continuously collect the tooth time of 40 teeth corresponding to the first cylinder, and the tooth time of 40 teeth corresponding to the first cylinder can be expressed as TT[0-39].

Step S20, obtaining an engine speed value corresponding to each tooth time.

In the embodiment, each collected tooth time is converted into an engine speed value. For example, as shown in FIG. 5, which is a schematic diagram of a variation curve of engine speed. Specifically, the unit of the tooth time corresponding to a single tooth is microseconds, and the unit of the engine speed value is generally rad/minute (rad/min), which can be converted by the following formula:

$$n\_EngInsTT[0-39]=10^{^9}/TT[0-39]$$

n_EngInsTT[0-39] is the engine speed value corresponding to the 40 teeth respectively.

Step S30, performing amplitude-frequency analysis processing on a plurality of the engine speed values by adopting discrete Fourier transform to obtain a modulus value and a phase angle of a complex number after the discrete Fourier transform.

In the embodiment, the discrete Fourier transform (DFT) is a Fourier transform that takes a discrete form in both the time domain and the frequency domain. It transforms the sampling of the time domain signal into a sampling of the frequency domain in the discrete time Fourier transform (DTFT). Specifically, the engine speed value corresponding to each tooth time can be used as a discrete signal, and the DFT can be performed to perform amplitude-frequency analysis and processing on multiple discrete signals, and calculate the modulus value and the and phase angle of the complex number after the DFT. For example, the DFT can be used to perform amplitude-frequency analysis processing on the engine speed values n_EngInsTT[0-39] corresponding to the 40 teeth respectively, and the modulus value and phase angle of the complex numbers after the DFT can be obtained. The complex number after the DFT is X(k), which can be set as X(k)=a(k)+ib(k), and the modulus value of the complex number after the DFT is Z_DFTAbs, the phase angle of the complex number after the DFT is an DFT.

Step S40, obtaining a predicted torque of the engine according to the modulus value and the phase angle.

In the embodiment, the magnitude of the engine torque depends on the cylinder pressure and phase angle of the engine combustion. The cylinder pressure acts on the piston surface to generate force, and the force acts on the piston to generate angular acceleration. The first derivative of the engine speed represents the angular acceleration of the engine. Therefore, the combustion torque of the engine can be calculated by representing the modulus value of the engine speed energy. The phase angle of the cylinder pressure represents the effectiveness of torque output to the piston, so the combustion efficiency of the engine can be calculated through the phase angle. Based on the combustion torque of the engine and the combustion efficiency of the engine, the engine torque can be predicted and the predicted torque can be obtained. In this process, the only sensor used is the crankshaft position sensor, thus avoiding the simultaneous use of multiple sensors, and improving the credibility of the predicted torque and vehicle safety.

In an embodiment, when obtaining the predicted torque of the engine based on the modulus value and phase angle, the average engine speed value corresponding to the current combustion cycle of the engine crankshaft can be obtained. The combustion torque of the engine is obtained by looking up the table with the modulus value Z_DFTAbs representing the rotational speed energy and the value n_Eng2RevAvg representing the average engine rotational speed within a combustion cycle. The combustion efficiency of the engine is obtained by looking up the table with the phase angle an_DFT representing the work time of the rotational speed and the value n_Eng2RevAvg representing the average engine speed in a combustion cycle. The combustion torque of the engine is multiplied by the combustion efficiency of the engine, and the product is the predicted torque of the engine.

In an embodiment, the average engine speed value corresponding to the current combustion cycle of the engine crankshaft can be obtained by averaging the engine speed values corresponding to the tooth times of the plurality of teeth of the engine crankshaft in the current combustion cycle. For example, the formula of the average engine speed value n_Eng2RevAvg corresponding to the combustion cycle of the engine crankshaft is as follows:

$$n\_Eng2RevAvg = n\_Eng3Seg \div 120$$

n_Eng3Seg is a sum of engine speed values corresponding to all teeth in the current combustion cycle. It should be noted that the end point of the current combustion cycle is the tooth currently detected by the crankshaft position sensor, and the starting point of the current combustion cycle is the tooth currently detected by the crankshaft position sensor and pushes back to the tooth where it is after one combustion cycle. For example, in a combustion cycle, when the cycle crankshaft needs to rotate 120 teeth, the current combustion cycle is the rotation phase between the 120 teeth before the current tooth.

In the technical solution disclosed in this embodiment, the tooth time of the engine crankshaft is collected only through the crankshaft position sensor and converted into an engine speed value. DFT is adopted to perform amplitude-frequency analysis processing on the plurality of discrete speed values to obtain the modulus value representing the rotational speed energy of the engine and the phase angle representing the effectiveness of piston torque, which can predict engine torque more accurately, avoiding the simultaneous use of multiple sensors, and improving the credibility of the predicted torque and vehicle safety.

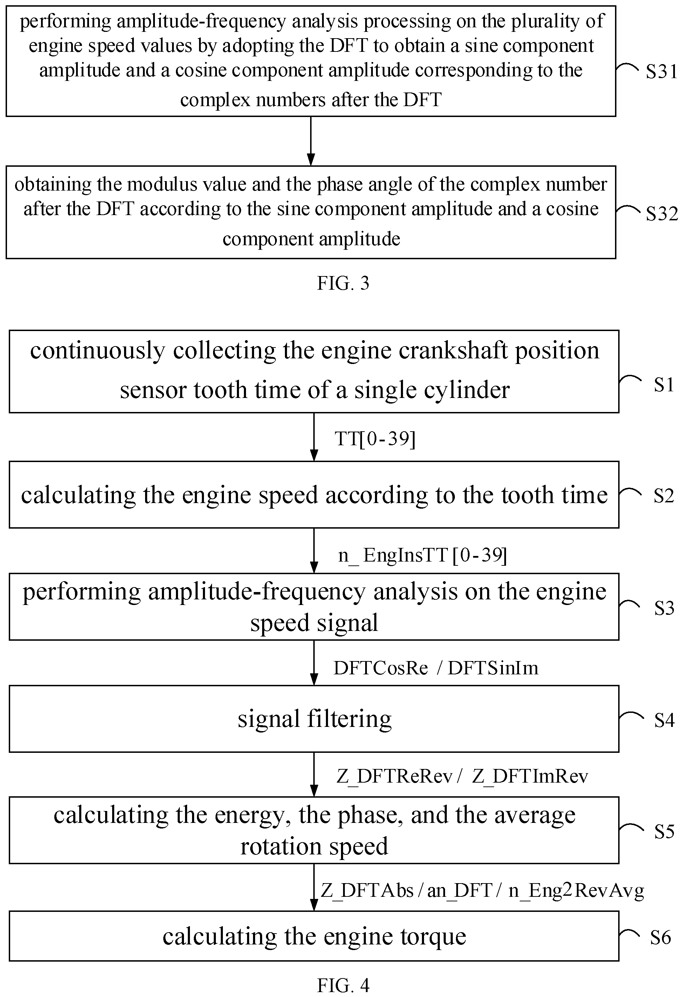

In another embodiment, as shown in FIG. 3, based on the above embodiment shown in FIG. 2, step S30 includes: Step S31, performing amplitude-frequency analysis processing on the plurality of engine speed values by adopting the DFT to obtain a sine component amplitude and a cosine component amplitude corresponding to the complex numbers after the DFT.

In this embodiment, the DFT can be performed on the engine speed values n_EngInsTT[0-39] corresponding to the 40 teeth respectively. The formula of the DFT is:

$$X(\mathrm{k}) = DFT[x(n)] = \sum_{n=0}^{N-1} x(n)\left( \cos\frac{2\pi k\mathrm{n}}{N} - i\sin\frac{2\pi k\mathrm{n}}{N} \right)$$
$$= \sum_{n=0}^{N-1} x(n)\cos\left(\frac{2\pi k\mathrm{n}}{N}\right) - i\sum_{\sum_{n=0}^{N-1} x(n)}^{N-1} x(n)\sin\left(\frac{2\pi k\mathrm{n}}{N}\right)$$

X(k) is a complex number after the DFT, which can be set as X(k)=a(k)+ib(k)n, and _EngInsTT[0-39] is x(n), which is the energy of the time domain signal requiring amplitude-frequency analysis analyzing the first-order energy based on these 40 signals. The amplitude of the cosine (cos) component corresponding to the complex number after the DFT is:

$$DFT\cos \mathrm{Re} = \cos\left(\frac{2\pi k n}{N}\right)$$

The amplitude of the sine (sin) component corresponding to the complex number after the DFT is:

$$DFTSin\,\mathrm{Im} = \sin\left(\frac{-2\pi k n}{N}\right)$$

k=1 is the first order, and N=40 sampling points.

Step S32, obtaining the modulus value and the phase angle of the complex number after the DFT according to the sine component amplitude and a cosine component amplitude.

In the embodiment, the following formula can be used to calculate the modulus value of the complex number after the DFT:

$$Z\_DFTAbs^2 = Z\_DFTReRev^2 + Z\_DFTImRev^2$$

and use the following formula to calculate the phase angle of the complex number after the DFT:

$$an\_DFT=acrtan(-Z\_DFTReRev/Z\_DFTImRev)$$

Z_DFTAbs is the modulus value of the complex number after the DFT, an_DFT is the phase angle of the complex number after the DFT, Z_DFTReRev is the amplitude of the above-mentioned cos component, and Z_DFTImRev is the amplitude of the above-mentioned sin component.

In an embodiment, in order to make the predicted torque more accurate, the sine component amplitude and the cosine component amplitude obtained by the amplitude-frequency analysis processing can be first subjected to signal filtering to obtain the sine component amplitude and the cosine component amplitude after the signal filtering processing, and then based on the sine component amplitude and cosine component amplitude after the signal filtering processing, the modulus and phase angle of the complex number after the DFT are obtained. At this time, Z_DFTReRev in the above formula is the cosine component amplitude after the signal filtering processing, and Z_DFTImRev is the sine component amplitude after the signal filtering processing.

In an embodiment, when performing signal filtering processing on the cosine component amplitude, the total cosine component amplitude corresponding to the current combustion cycle of the engine crankshaft can be obtained according to the cosine component amplitude. For example, when the cosine component amplitude corresponds to the current cylinder, the cosine component amplitude corresponding to the current cylinder and the cosine component amplitudes corresponding to the first two cylinders of the current cylinder are summed to obtain the total cosine component amplitude corresponding to the current combustion cycle of the engine crankshaft. According to the total cosine component amplitude corresponding to the current combustion cycle and the total cosine component amplitude corresponding to the previous combustion cycle, the cosine component amplitude after the signal filtering processing is obtained. For example, the total cosine component amplitude corresponding to the current combustion cycle and the total cosine component amplitude corresponding to the previous combustion cycle is averaged, weighted average, weighted sum, etc., to obtain the cosine component amplitude after the signal filtering processing. When using the weighted average, the formula is as follows:

$$Z\_DFTReRev=(Z\_DFTRe3Seg \times Z\_DFTnEngAvgCmpRe+Z\_DFTRe3SegPrv \times Z\_D FTnEngAvgCmpRe)/2$$

Z_DFTReRev is the cosine component amplitude after the signal filtering processing, Z_DFTRe3Seg is the total cosine component amplitude corresponding to the current combustion cycle, Z_DFTnEngAvgCmpRe is the weighting factor of the total cosine component amplitude corresponding to the current combustion cycle, and Z_DFTRe3SegPrv is the total cosine component amplitude corresponding to the previous combustion cycle. Z_DFTnEngAvgCmpRe is the weighting factor of the total cosine component amplitude corresponding to the previous combustion cycle. In an embodiment, the weighting factor can be manually set according to actual requirements.

In an embodiment, when performing signal filtering processing on the sine component amplitude, the total sine component amplitude corresponding to the current combustion cycle of the engine crankshaft can be obtained according to the sine component amplitude. For example, when the sine component amplitude corresponds to the current cylinder, the sine component amplitude corresponding to the current cylinder and the sine component amplitudes corresponding to the first two cylinders of the current cylinder are summed to obtain the total sine component amplitude corresponding to the current combustion cycle of the engine crankshaft. According to the total sine component amplitude corresponding to the current combustion cycle and the total sine component amplitude corresponding to the previous combustion cycle, the sine component amplitude after the signal filtering processing is obtained. For example, the total sine component amplitude corresponding to the current combustion cycle and the total sine component amplitude corresponding to the previous combustion cycle is averaged, weighted average, weighted sum, etc., to obtain the sine component amplitude after the signal filtering processing. When using the weighted average, the formula is as follows:

$$Z\_DFTImRev=(Z\_DFTIm3Seg \times Z\_DFTnEngAvgCmpIm+Z\_DFTIm3SegPrv \times Z\_DFTnEngAvgCmpIm)/2$$

Z_DFTImRev is the sine component amplitude after the signal filtering processing, Z_DFTIm3Seg is the total sine component amplitude corresponding to the current combustion cycle, Z_DFTnEngAvgCmpIm is the weighting factor of the total sine component amplitude corresponding to the current combustion cycle, and Z_DFTIm3SegPrv is the total sine component amplitude corresponding to the previous combustion cycle. Z_DFTnEngAvgCmpIm is the weighting factor of the total sine component amplitude corresponding to the previous combustion cycle. In an embodiment, the weighting factor can be manually set according to actual requirements.

In the technical solution disclosed in this embodiment, DFT is adopted to perform amplitude-frequency analysis processing on multiple engine speed values to obtain the sine component amplitude and cosine component amplitude corresponding to the complex numbers after the DFT, and according to the sine component amplitude and the cosine component amplitude, the modulus value representing the engine speed energy and the phase angle representing the effectiveness of the torque output to the piston are obtained, realizing torque prediction based on the physical model with less calibration data.

In an embodiment, as shown in FIG. 4, based on the embodiment shown in FIG. 2 to 3, an example of the prediction method for engine torque is as follows:

Step S 1, as shown in FIG. 6, starting from the second falling edge after the missing tooth of the first cylinder, the engine crankshaft position sensor tooth time of 40 teeth in a single cylinder is continuously collected. Taking a three-cylinder engine as an example, the crankshaft has 60 teeth, including 2 missing teeth. The work of the three cylinders of the engine are completed while the crankshaft rotates 2 times, that is, 60 times 2 equals 120 teeth, one of the cylinders has 40 teeth.

Step S2, speed calculation. The tooth time TT[0-39] (unit $\mu$s) to speed n_EngInsTT[0-39] (rad/min), n_EngInsTT[0-39]=1000000000/TT[0-39].

Step S3, performing the DFT on the 40 teeth speed signal n_EngInsTT[0-39]. The formula of the DFT is:

$$X(\mathrm{k}) = DFT[x(n)] = \sum_{n=0}^{N-1} x(n)\left(\cos\frac{2\pi k \mathrm{n}}{\mathrm{N}} - i\sin\frac{2\pi k \mathrm{n}}{\mathrm{N}}\right)$$

$$= \sum_{n=0}^{N-1} x(n)\cos\left(\frac{2\pi k \mathrm{n}}{\mathrm{N}}\right) - i\sum_{\sum_{n=0}^{N-1}x(n)}^{N-1} x(n)\sin\left(\frac{2\pi k \mathrm{n}}{\mathrm{N}}\right);$$

n_EngInsTT is x(n), which is the time domain signal that needs to be analyzed. Based on the 40 signals in the cylinder, the first-order energy is analyzed, and the cos component is:

$$DFT\cos\mathrm{Re} = \cos\left(\frac{2\pi k n}{N}\right)$$

k=1 is the first order, and N=40 sampling points; the sin component is:

$$DFTSin\,\mathrm{Im} = \sin\left(\frac{-2\pi k n}{N}\right)$$

k=1 is the first order, and N=40 sampling points.

Step S4, signal filtering. Take the cos component of a combustion cycle: Z_DFTRe3Seg is the value of the previous combustion cycle, Z _DFTRe3 SegPrv is the value of the further previous combustion cycle. It should be noted that since the three cylinders of the engine require two rotations of the crankshaft to complete their work, and two rotations of the crankshaft constitute a combustion cycle, the value of the "3Seg" of the previous combustion cycle refers to a sum of the value corresponding to the current cylinder and the values corresponding to the two cylinders previous to the current cylinder, that is, the sum of the values corresponding to the three nearest cylinders in the time dimension. The value of the further previous combustion cycle "3SegPrv" refers to a sum of the value corresponding to the third cylinder of the current cylinder, the value corresponding to the fourth cylinder of the current cylinder and the value corresponding to the fifth cylinder of the current cylinder, that is, the sum of the value corresponding to the fourth cylinder, the value corresponding to the fifth cylinder and the value corresponding to the sixth cylinder closest in the time dimension.

The average amplitude of the cos component Z_DFTReRev=(the amplitude of the cos component of the current combustion cycle Z_DFTRe3Seg × weighting factor Z_DFTnEngAvgCmpRe+the amplitude of the cos component of the previous combustion cycle Z_DFTRe3 SegPrv × weighting factor Z_DFTnEngAvgCmpRe)/2.

The average amplitude of the sin component Z_DFTImRev=(the amplitude of the sin component of the current combustion cycle Z_DFTIm3Seg × weighting factor Z_DFTnEngAvgCmpIm+the amplitude of the sin component of the previous combustion cycle Z_DFTIm3 SegPrv × weighting factor Z_DFTnEngAvgCmpIm)/2.

Step S5, calculating the modulus value representing the energy, the phase angle and the rotation speed within a combustion cycle. For the DFT X(k) of x(n), X(k) is generally a complex number and can be set as X(k)=a(k)+ib(k). The modulus value Z_DFTAbs, the phase angle an_DFT and the average speed within a combustion cycle n_Eng2RevAvg are respectively:

modulus value:

$$Z\_DFTAbs^2=Z\_DFTReRev^2+Z\_DFTImRev^2$$

phase angle:

$$an\_DFT=acrtan(-Z\_DFTReRev/Z\_DFTImRev)$$

average speed:

$$n\_Eng2RevAvg=n\_Eng3Seg\div120$$

"Eng" in n_Eng2RevAvg represents the engine, "2Rev" refers to the engine crankshaft rotating for two revolutions, that is, one combustion cycle, and "Avg" refers to the average speed.

Step S6, calculating the engine torque. The predicted engine torque Tq_IndNet is obtained by multiplying the engine combustion torque and combustion efficiency. The engine combustion torque is obtained by looking up the table through the modulus value Z_DFTAbs representing the speed energy and the value n_Eng2RevAvg representing the average speed within a combustion cycle. The combustion efficiency is obtained by looking up the table through the phase an_DFT representing the rotational speed work time and the value n_Eng2RevAvg representing the average speed within a combustion cycle.

The prediction method for engine torque involved in the embodiments calculates the actual engine torque by the engine speed signal, which is highly adaptable and reliable, and only uses a physical model with less calibration data. Since it is only related to the engine speed signal based on the crankshaft position sensor, the frequency of inaccurate torque calculations caused by signal failure when using multiple sensors is reduced.

In addition, embodiments of the present application further provide a prediction device for engine torque. The prediction device for engine torque includes: a memory, a processor, and a prediction program for engine torque stored on the memory and operable on the processor. When the prediction program for engine torque is executed by the processor, the steps of the prediction method for engine torque described in the above embodiments are implemented.

In addition, embodiments of the present application further provide a computer storage medium, which stores a prediction program for engine torque. When the prediction program for engine torque is executed by a processor, the steps of the prediction method for engine torque described in the above embodiments are implemented.

It should be noted that, as used herein, the term "comprise", "include" or any other variation thereof is intended to cover a non-exclusive inclusion such that a process, method, article or system comprising a set of elements includes not only those elements, it also includes other elements not expressly listed, or elements inherent in the process, method, article, or system. Without further limitations, an element defined by the phrase "comprising a..." does not preclude the presence of additional identical elements in the process, method, article, or system comprising that element.

The serial numbers of the above embodiments of the present application are for description only, and do not represent the advantages and disadvantages of the embodiments.

Through the description of the above embodiments, those skilled in the art can clearly understand that the methods of the above embodiments can be implemented by means of software plus a necessary general-purpose hardware platform, and of course also by hardware, but in many cases the former is a better implementation. Based on such an understanding, the technical solution of the present application can be embodied in the form of a software product in essence or the part that contributes to the related art, and the computer software product is stored in a storage medium as described above (such as ROM/RAM, magnetic disk, optical disk), including several instructions to enable a terminal device (which may be a mobile phone, computer, server, or network device, etc.) to execute the methods described in various embodiments of the present application.

The above are only some embodiments of the present application, and are not intended to limit the patent scope of the present application. Any equivalent structure or equivalent process transformation made by using the contents of the specification and drawings of the present application, or directly or indirectly used in other related technical fields, is also included in the scope of the present application.

**Claims**

1.    A prediction method for engine torque, **characterized by** comprising:

collecting tooth times corresponding to a plurality of teeth of an engine crankshaft based on a crankshaft position sensor;

obtaining an engine speed value corresponding to each tooth time;

performing amplitude-frequency analysis processing on a plurality of the engine speed values by adopting discrete Fourier transform to obtain a modulus value and a phase angle of a complex number after the discrete Fourier transform; and

obtaining a predicted torque of an engine according to the modulus value and the phase angle.

2. The prediction method for engine torque according to claim 1, wherein the obtaining the predicted torque of the engine according to the modulus value and the phase angle comprises:

obtaining an average engine speed value corresponding to a current combustion cycle of the engine crankshaft;

obtaining an engine combustion torque according to the average engine speed value and the modulus value;

obtaining an engine combustion efficiency according to the average engine speed value and the phase angle; and

configuring a product of the engine combustion torque and the engine combustion efficiency as the predicted torque.

3. The prediction method for engine torque according to claim 1, wherein the performing the amplitude-frequency analysis processing on the plurality of engine speed values by adopting the discrete Fourier transform to obtain the modulus value and the phase angle of the complex number after the discrete Fourier transform comprises:

performing the amplitude-frequency analysis processing on the plurality of engine speed values by adopting the discrete Fourier transform to obtain a sine component amplitude and a cosine component amplitude corresponding to the complex number after the discrete Fourier transform; and

obtaining the modulus value and the phase angle of the complex number after the discrete Fourier transform according to the sine component amplitude and the cosine component amplitude.

4. The prediction method for engine torque according to claim 3, wherein the obtaining the modulus value and the phase angle of the complex number after the discrete Fourier transform according to the sine component amplitude and the cosine component amplitude comprises:

performing signal filtering processing on the sine component amplitude and the cosine component amplitude to obtain the sine component amplitude and the cosine component amplitude after the signal filtering processing; and

obtaining the modulus value and the phase angle of the complex number after the discrete Fourier transform according to the sine component amplitude and the cosine component amplitude after the signal filtering processing.

5. The prediction method for engine torque according to claim 4, wherein the performing the signal filtering processing on the sine component amplitude and the cosine component amplitude to obtain the sine component amplitude and the cosine component amplitude after the signal filtering processing comprises:

obtaining a total sine component amplitude corresponding to the current combustion cycle of the engine crankshaft according to the sine component amplitude, and obtaining a total cosine component amplitude corresponding to the current combustion cycle of the engine crankshaft according to the cosine component amplitude;

obtaining the sine component amplitude after the signal filtering processing according to the total sine component amplitude corresponding to the current combustion cycle and a total sine component amplitude corresponding to a previous combustion cycle; and

obtaining the cosine component amplitude after the signal filtering processing according to the total cosine component amplitude corresponding to the current combustion cycle and a total cosine component amplitude corresponding to a previous combustion cycle.

6. The prediction method for engine torque according to claim 4, wherein:

the obtaining the sine component amplitude after the signal filtering processing according to the total sine component amplitude corresponding to the current combustion cycle and the total sine component amplitude corresponding to a previous combustion cycle comprises:

performing weighted average processing on the total sine component amplitude corresponding to the current combustion cycle and the total sine component amplitude corresponding to the previous combustion cycle to obtain the sine component amplitude after the signal filtering processing;

the obtaining the cosine component amplitude after the signal filtering processing according to the total cosine component amplitude corresponding to the current combustion cycle and the total cosine component amplitude corresponding to a previous combustion cycle comprises:

performing weighted average processing on the total cosine component amplitude corresponding to the current combustion cycle and the total cosine component amplitude corresponding to the previous combustion cycle to obtain the cosine component amplitude after the signal filtering processing.

7. The prediction method for engine torque according to claim 3 or 4, wherein:

the modulus value of the complex number after the discrete Fourier transform is calculated by the following formula:

$$Z\_DFTAbs^2 = Z\_DFTReRev^2 + Z\_DFTImRev^2$$

the phase angle of the complex number after the discrete Fourier transform is calculated by the following formula:

$$an\_DFT = acrtan(-Z\_DFTReRev/Z\_DFTImRev)$$

wherein, Z_DFTAbs is the modulus value of the complex number after the discrete Fourier transform, and an_DFT is the phase angle of the complex number after the discrete Fourier transform; in response to that Z_DFTReRev is the cosine component amplitude, Z_DFTImRev is the sine component amplitude, or in response to that Z_DFTReRev is the cosine component amplitude after the signal filtering processing, Z_DFTImRev is the sine component amplitude after the signal filtering processing.

8. The prediction method for engine torque according to claim 1, wherein:
the collecting tooth times corresponding to the plurality of teeth of the engine crankshaft based on the crankshaft position sensor comprises:

collecting the tooth time of a tooth corresponding to at least one engine cylinder based on the crankshaft position sensor among the plurality of teeth of the engine crankshaft;
the performing the amplitude-frequency analysis processing on the plurality of engine speed values by adopting the discrete Fourier transform comprises:
performing the amplitude-frequency analysis processing on a plurality of engine speed values corresponding to at least one engine cylinder by adopting the discrete Fourier transform.

9. A prediction device for engine torque, **characterized by** comprising:

a memory;
a processor; and
a prediction program for engine torque stored on the memory and operable on the processor;
wherein the prediction program for engine torque is configured to implement the steps of the prediction method for engine torque according to any one of claims 1 to 8.

10. A computer-readable storage medium, **characterized in that** a prediction program for engine torque is stored on the computer-readable storage medium, and when the prediction program for engine torque is executed by a processor, steps of the prediction method for engine torque according to any one of claims 1 to 8 are implemented.

```
                          ┌── 1001
                      ┌──────────────┐                    1003──┐
                      │  processor   │          ┌─────────────────────────────────┐
      ┌── 1002        └──────┬───────┘          │  ┌───────────────────────────┐  │
      │                      │                  │  │          network          │  │
──────┼──────────────────────┼──────────┐      │  │  communication module     │  │
                             │       ┌── 1004   │  ├───────────────────────────┤  │
                             │       │          │  │   prediction program      │  │
                      ┌──────┴───────┐│         │  │    for engine torque      │  │
                      │   network    ││         │  └───────────────────────────┘  │
                      │   interface  │          │           processor             │
                      └──────────────┘          └─────────────────────────────────┘
```

FIG. 1

```
┌────────────────────────────────────────────────────────────────┐
│ collecting tooth times corresponding to a plurality of teeth of │⌐─ S10
│ an engine crankshaft based on a crankshaft position sensor      │
└────────────────────────────────────────────────────────────────┘
                              │
                              ▼
┌────────────────────────────────────────────────────────────────┐
│ obtaining an engine speed value corresponding to each tooth time│⌐─ S20
└────────────────────────────────────────────────────────────────┘
                              │
                              ▼
┌────────────────────────────────────────────────────────────────┐
│ performing amplitude-frequency analysis processing on a         │
│ plurality of the engine speed values by adopting discrete       │⌐─ S30
│ Fourier transform to obtain a modulus value and a phase angle   │
│ of a complex number after the discrete Fourier transform        │
└────────────────────────────────────────────────────────────────┘
                              │
                              ▼
┌────────────────────────────────────────────────────────────────┐
│ obtaining a predicted torque of the engine according to the     │⌐─ S40
│ modulus value and the phase angle                               │
└────────────────────────────────────────────────────────────────┘
```

FIG. 2

performing amplitude-frequency analysis processing on the plurality of engine speed values by adopting the DFT to obtain a sine component amplitude and a cosine component amplitude corresponding to the complex numbers after the DFT — S31

obtaining the modulus value and the phase angle of the complex number after the DFT according to the sine component amplitude and a cosine component amplitude — S32

FIG. 3

continuously collecting the engine crankshaft position sensor tooth time of a single cylinder — S1

TT[0-39]

calculating the engine speed according to the tooth time — S2

n_EngInsTT[0-39]

performing amplitude-frequency analysis on the engine speed signal — S3

DFTCosRe / DFTSinIm

signal filtering — S4

Z_DFTReRev / Z_DFTImRev

calculating the energy, the phase, and the average rotation speed — S5

Z_DFTAbs / an_DFT / n_Eng2RevAvg

calculating the engine torque — S6

FIG. 4

FIG. 5

FIG. 6

## INTERNATIONAL SEARCH REPORT

| International application No. |
| --- |
| **PCT/CN2022/107321** |

**A.    CLASSIFICATION OF SUBJECT MATTER**

F02B 77/08(2006.01)i;  G06F 30/20(2020.01)i;  G01M 15/00(2006.01)i;  G01L 3/00(2006.01)i

According to International Patent Classification (IPC) or to both national classification and IPC

**B.    FIELDS SEARCHED**

Minimum documentation searched (classification system followed by classification symbols)

F02B; G06F; G01M; G01L

Documentation searched other than minimum documentation to the extent that such documents are included in the fields searched

Electronic data base consulted during the international search (name of data base and, where practicable, search terms used)

CNTXT; ENTXTC; DWPI: 曲轴, 扭矩, 转矩, 预测, 估算, 转速, 速度, 傅里叶, 傅立叶, 模, 相位, 幅值, 角度, 燃烧扭矩, 燃烧效率, crank, torque, estimat+, speed, sensor, Fourier, DFT, FFT, phase, angle, combustion, efficiency.

**C.    DOCUMENTS CONSIDERED TO BE RELEVANT**

| Category* | Citation of document, with indication, where appropriate, of the relevant passages | Relevant to claim No. |
| --- | --- | --- |
| X | JP 4994403 B2 (HITACHI AUTOMOTIVE SYSTEMS LTD.) 08 August 2012 (2012-08-08) description, paragraphs 0025-0088, and figures 1-14 | 1, 3-10 |
| PX | CN 113818963 A (NINGBO GEELY LUOYOU ENGINE PARTS CO., LTD. et al.) 21 December 2021 (2021-12-21) claims 1-10 | 1-10 |
| A | EP 1052488 A1 (RENAULT) 15 November 2000 (2000-11-15) entire document | 1-10 |
| A | US 5771483 A (RENAULT) 23 June 1998 (1998-06-23) entire document | 1-10 |
| A | CN 101069077 A (VOLVO LASTVAGNAR AB) 07 November 2007 (2007-11-07) entire document | 1-10 |
| A | CN 102261995 A (GM GLOBAL TECHNOLOGY OPERATIONS LLC) 30 November 2011 (2011-11-30) entire document | 1-10 |
| A | CN 110542562 A (WEICHAI POWER CO., LTD.) 06 December 2019 (2019-12-06) entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 September 2022** | **09 October 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/107321** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 104747288 A (DIAS AUTOMOTIVE ELECTRONIC SYSTEMS CO., LTD.) 01 July 2015 (2015-07-01)<br>        entire document | 1-10 |
| A | CN 102518521 A (DALIAN UNIVERSITY OF TECHNOLOGY) 27 June 2012 (2012-06-27)<br>        entire document | 1-10 |

Form PCT/ISA/210 (second sheet) (January 2015)

# EP 4 407 157 A1

| INTERNATIONAL SEARCH REPORT | | | International application No. |
| --- | --- | --- | --- |
| Information on patent family members | | | PCT/CN2022/107321 |

| Patent document cited in search report | | | Publication date (day/month/year) | Patent family member(s) | | | Publication date (day/month/year) |
| --- | --- | --- | --- | --- | --- | --- | --- |
| JP | 4994403 | B2 | 08 August 2012 | JP | 2010190174 | A | 02 September 2010 |
| CN | 113818963 | A | 21 December 2021 | None | | | |
| EP | 1052488 | A1 | 15 November 2000 | DE | 60037612 | D1 | 14 February 2008 |
| | | | | FR | 2793558 | A1 | 17 November 2000 |
| | | | | EP | 1052488 | B1 | 02 January 2008 |
| | | | | FR | 2793558 | B1 | 06 July 2001 |
| | | | | DE | 60037612 | T2 | 08 January 2009 |
| US | 5771483 | A | 23 June 1998 | WO | 9642002 | A1 | 27 December 1996 |
| | | | | DE | 69625451 | D1 | 30 January 2003 |
| | | | | JP | H10504110 | A | 14 April 1998 |
| | | | | EP | 0775302 | A1 | 28 May 1997 |
| | | | | EP | 0775302 | B1 | 18 December 2002 |
| | | | | JP | 3672316 | B2 | 20 July 2005 |
| | | | | DE | 69625451 | T2 | 11 March 2004 |
| | | | | FR | 2735232 | A1 | 13 December 1996 |
| | | | | FR | 2735233 | A1 | 13 December 1996 |
| CN | 101069077 | A | 07 November 2007 | BR | PI0419180 | A | 18 December 2007 |
| | | | | JP | 2008520970 | A | 19 June 2008 |
| | | | | AT | 483956 | T | 15 October 2010 |
| | | | | WO | 2006054928 | A1 | 26 May 2006 |
| | | | | US | 2009132182 | A1 | 21 May 2009 |
| | | | | EP | 1815221 | A1 | 08 August 2007 |
| | | | | DE | 602004029512 | D1 | 18 November 2010 |
| | | | | ES | 2353768 | T3 | 04 March 2011 |
| | | | | CN | 100491942 | C | 27 May 2009 |
| | | | | US | 7742882 | B2 | 22 June 2010 |
| | | | | EP | 1815221 | B1 | 06 October 2010 |
| | | | | JP | 4934049 | B2 | 16 May 2012 |
| CN | 102261995 | A | 30 November 2011 | US | 2011265560 | A1 | 03 November 2011 |
| | | | | DE | 102011018552 | A1 | 22 December 2011 |
| | | | | US | 8256278 | B2 | 04 September 2012 |
| | | | | CN | 102261995 | B | 13 August 2014 |
| CN | 110542562 | A | 06 December 2019 | CN | 110542562 | B | 05 April 2022 |
| CN | 104747288 | A | 01 July 2015 | CN | 104747288 | B | 04 May 2018 |
| CN | 102518521 | A | 27 June 2012 | CN | 102518521 | B | 25 December 2013 |

Form PCT/ISA/210 (patent family annex) (January 2015)

**REFERENCES CITED IN THE DESCRIPTION**

**Patent documents cited in the description**

- CN 202111118355